# EUROPEAN PATENT APPLICATION

(11) **EP 4 446 482 A1**
(43) Date of publication of application: **16.10.2024**
(21) Application number: 23192399.6
(22) Date of filing: 21.08.2023
(51) Int. Cl.: D01F 1/10, D01F 6/46, D01D 1/06

(54) **METHOD FOR PREPARING POLYOLEFIN FIBER AND PRODUCT AND USE**

(30) Priority: 14.04.2023 CN 202310399078
(71) Applicant: HuiHong (Nantong) Safety Products Co., Ltd., 226400 Nantong City Jiangsu (CN)
(72) Inventor: LIN, Dongliang, Nantong City, 226400 (CN)
(74) Representative: ZHAOffice SPRL

(57) **Abstract**

The present invention relates to the technical field of fiber production and discloses a method for preparing a polyolefin fiber and a product and use. The preparation method comprises the following specific steps: S1. mixing a silane coupling agent, a dispersant and an organic solvent to obtain a treatment solution; S2. uniformly dispersing the treatment solution on a fully dried ceramic fiber and high-speed stirring, wherein the ceramic fiber is a mixture of nanoscale alumina, microscale alumina, nanoscale silica and microscale silica; and S3. high-speed premixing a polyolefin powder and the treated ceramic fiber to obtain an anti-cutting functional masterbatch, and then melt extruding the same to obtain the polyolefin fiber. The method of the present invention enables significant improvement of the strength, wear resistance, softness, comfort, moisture absorption and permeability of the prepared polyolefin fiber, thereby greatly improving the anti-cutting performance, hand feel and comfort of the polyolefin fiber.

## Description

### TECHNICAL FIELD

The present invention relates to the technical field of fiber production, and in particular, to a method for preparing a polyolefin fiber and a product and use.

### BACKGROUND

The most commonly used raw material for anti-cutting fabrics is polyolefin fibers. The polyolefin fibers refer to a type of synthetic fibers composed of linear macromolecules polymerized from olefins. Polyethylene fiber, polypropylene fiber, etc. are common polyolefin fibers. Traditional anti-cutting fabrics are often woven from polyolefin fibers and hard fibers such as glass fibers and steel wires. Such products have a certain effect on anti-cutting, but they are not ideal when used in parts that come into contact with the human body for poor hand feel and low comfort. Meanwhile, the production process has cumbersome steps and the cost is high. Therefore, there is an urgent need for a bulk fiber from the view of the anti-cutting function.

In the prior art, related researches on the preparation of polyolefin fibers having an anti-cutting function, such as a method for preparing an anti-cutting polyethylene fiber in patent application CN108277546A and others, all can achieve a certain anti-cutting function directly by preparing a modified polyolefin fiber without the need for subsequent compositing with a hard fiber. However, in the prior art, there is still a problem that a filling modified material is dispersed non-uniformly when the polyolefin fiber has a high viscoelasticity, so that the anti-cutting function of the prepared polyolefin fiber is still normal, and at the same time, the improvement in hand feel and comfort of the polyolefin fiber prepared by the prior art is still limited.

For this reason, there is a need for a new technical solution to solve the above-mentioned technical problem.

### SUMMARY

The objective of the present invention is to provide a method for preparing a polyolefin fiber and a product and use, to solve the technical problem proposed in the background that in the prior art, there is still a problem that a filling modified material is dispersed non-uniformly when the polyolefin fiber has a high viscoelasticity, so that the anti-cutting function of the prepared polyolefin fiber is still normal, and at the same time, the improvement in hand feel and comfort of the polyolefin fiber prepared by the prior art is still limited.

To achieve the above objective, the present invention adopts the following technical solutions.

In a first aspect, the present invention provides a method for preparing a polyolefin fiber, comprising the following specific steps:
S1. mixing a silane coupling agent, a dispersant and an organic solvent to obtain a treatment solution, wherein the silane coupling agent preferably is a mixture of at least two of silane coupling agent KH-602, silane coupling agent KH550, silane coupling agent KH540 and silane coupling agent YDH-151 with methylphenyldimethoxysilane in any ratio, and the dispersant preferably is a mixture of sodium silicate and calcium carbonate in any ratio;
S2. uniformly dispersing the treatment solution on a fully dried ceramic fiber and high-speed stirring preferably at 1800-2200 rpm at a temperature of 60-80°C for 120-200 min, wherein the ceramic fiber is a mixture of nanoscale alumina, microscale alumina, nanoscale silica and microscale silica, and preferably specifically, in per part of the fully dried ceramic fiber, both the parts by mass of the nanoscale alumina and the nanoscale silica are 3-10 parts, respectively, both the parts by mass of the microscale alumina and the microscale silica are 40-50 parts, respectively, preferably both the average particle sizes of the nanoscale alumina and the nanoscale silica are 30-70 nm, both the average particle sizes of the micronscale alumina and the micronscale silica are 1-5 µm, and both the average lengths of the microscale alumina and the microscale silica are 1-50 µm; and
S3. high-speed premixing a polyolefin powder and the treated ceramic fiber to obtain an anti-cutting functional masterbatch, and then melt extruding the same to obtain the polyolefin fiber: preferably specifically, a polyolefin powder and the treated ceramic fiber are first premixed in a high-speed mixer at a rotation speed of 400-500 rpm at 90-100°C for 1.5-2.5 h to obtain an anti-cutting functional masterbatch, and then the anti-cutting functional masterbatch is melt extruded through a twin-screw extruder and is passed through a spinneret orifice to form a trickle of melt, followed by side-blowing cooling, stretching, heat-setting and winding in turn, to prepare the polyolefin fiber;
   further, the mass of the silane coupling agent is preferably 5%-15% of the mass of the fully dried ceramic fiber, the mass of the dispersant is 2%-4% of the mass of the fully dried ceramic fiber, and the mass ratio of the fully dried ceramic fiber to the polyolefin powder is 1: 18-1:20.

In a second aspect, the present invention provides a polyolefin fiber obtained by the above preparation method.

In a third aspect, the present invention provides a use of the polyolefin fiber obtained by the above preparation method in an anti-cutting fabric.

Compared with the prior art, the present invention has the following beneficial effects:
1. The ceramic fiber in the present invention is formed by mixing nanoscale alumina, micronscale alumina, nanoscale silica and micronscale silica. This is obtained by phase mixing of two phases of alumina and silica, such that the ceramic fiber with good interface bonding and high stability can be more uniformly dispersed in a polyolefin fiber when they are introduced into the polyolefin fiber. In this case, under the cooperation and synergistic effect of the superior characteristics of alumina and silica themselves, the strength, wear resistance, softness, comfort, moisture absorption and permeability of the prepared polyolefin fiber can be significantly improved, and thus the anti-cutting performance, hand feel and comfort of the polyolefin fiber are greatly improved. On this basis, in the present invention, the ceramic fiber is modified and pretreated with a treatment solution formed by mixing a silane coupling agent, a dispersant and an organic solvent, which can effectively improve the compatibility between the ceramic fiber and the polyolefin powder, such that the dispersion uniformity of the ceramic fiber in the polyolefin fiber is fully guaranteed, and finally, the anti-cutting performance, hand feel and comfort of the polyolefin fiber are further improved.
2. On the basis that the ceramic fiber is formed by mixing nanoscale alumina, micronscale alumina, nanoscale silica and micronscale silica, and by properly controlling the ratio of nanoscale alumina, micronscale alumina, nanoscale silica and micronscale silica and respective parameters thereof, the present invention enables the ceramic fiber obtained by mixing to form a perfect crystal structure with a high Mohs hardness, which effectively improves the apparent hardness and microscopic bending strength of the ceramic fiber, such that the ceramic fiber plays a better effect of dispersing stress in the polyolefin fiber, and finally the anti-cutting performance of the polyolefin fiber is further improved. In addition, by properly controlling the addition amounts, i.e., the proportions in the anti-cutting masterbatch, of the ceramic fiber and the polyolefin powder, the present invention enables smooth spinning process and stable spinning quality, thereby further improving the overall performance of the polyolefin fiber, and improving the anti-cutting performance, hand feel and comfort of the polyolefin fiber.
3. The silane coupling agent in the present invention is a mixture of at least two of silane coupling agent KH-602, silane coupling agent KH550, silane coupling agent KH540 and silane coupling agent YDH-151 with methylphenyldimethoxysilane. The dispersant uses a mixture of two inorganic binders: sodium silicate and calcium carbonate. Both cooperate with each other, work together, and have a superior dispersion property for the ceramic fiber formed by mixing alumina and silica, which can prevent the agglomeration phenomenon in the subsequent spinning process, to ensure the continuous and stable production of the polyolefin fiber, and finally, further ensure the overall performance of the polyolefin fiber and ensure the anti-cutting performance, hand feel and comfort of the polyolefin fiber.

### DETAILED DESCRIPTION OF THE INVENTION

The following examples are used for further illustrating the content of the present invention, and not intended to limit the application of the present invention.

"Parts" in the examples all refer to parts by weight.

### Example 1

Preparation of an anti-cutting fabric:
S1. At least two of silane coupling agent KH-602, silane coupling agent KH550, silane coupling agent KH540 and silane coupling agent YDH-151 were mixed arbitrarily with methylphenyldimethoxysilane to obtain a silane coupling agent, sodium silicate and calcium carbonate were mixed arbitrarily to obtain a dispersant, and then 0.25 part of the silane coupling agent and 0.1 part of the dispersant were taken and blended with an absolute ethanol to obtain a treatment solution.
S2. 5 parts of a fully dried ceramic fiber was added in a VC high-speed humidifying mixer (3 parts of nanoscale alumina with an average particle size of 30-70 nm, 3 parts of nanoscale silica with an average particle size of 30-70 nm, 47 parts of microscale alumina with an average particle size of 1-5 µm and an average length of 1-50 µm, and 47 parts of microscale silica with an average particle size of 1-5 µm and an average length of 1-50 µm per part of the fully dried ceramic fiber).
S3. The treatment solution obtained in the step S1 was uniformly dispersed on the ceramic fiber in the step S2, and high-speed stirred at 2000 rpm at a temperature of 60°C for 2 h.
S4. 95 parts of a polyolefin powder and the ceramic fiber treated in the step S3 were taken and uniformly mixed in a high-speed mixer at 450 rpm at a temperature of 95°C for 2 h, to obtain an anti-cutting functional masterbatch.
S5. The anti-cutting functional masterbatch prepared in the step S4 was melt extruded through a twin-screw extruder, and was passed through a spinneret orifice to form a trickle of melt, followed by side-blowing cooling, stretching, heat-setting and winding in turn, to prepare a polyolefin fiber.
S6. The obtained polyolefin fiber was woven to make an anti-cutting fabric like a glove base.

### Example 2

Preparation of an anti-cutting fabric:
S1. At least two of silane coupling agent KH-602, silane coupling agent KH550, silane coupling agent KH540 and silane coupling agent YDH-151 were mixed arbitrarily with methylphenyldimethoxysilane to obtain a silane coupling agent, sodium silicate and calcium carbonate were mixed arbitrarily to obtain a dispersant, and then 0.75 part of the silane coupling agent and 0.2 part of the dispersant were taken and blended with an absolute ethanol to obtain a treatment solution.
S2. 5 parts of a fully dried ceramic fiber was added in a VC high-speed humidifying mixer (10 parts of nanoscale alumina with an average particle size of 30-70 nm, 10 parts of nanoscale silica with an average particle size of 30-70 nm, 50 parts of microscale alumina with an average particle size of 1-5 µm and an average length of 1-50 µm, and 50 parts of microscale silica with an average particle size of 1-5 µm and an average length of 1-50 µm per part of the fully dried ceramic fiber).
S3. The treatment solution obtained in the step S1 was uniformly dispersed on the ceramic fiber in the step S2, and high-speed stirred at 2200 rpm at a temperature of 80°C for 100 min.
S4. 100 parts of a polyolefin powder and the ceramic fiber treated in the step S3 were taken and uniformly mixed in a high-speed mixer at 500 rpm at a temperature of 90°C for 1.5 h, to obtain an anti-cutting functional masterbatch.
S5. The anti-cutting functional masterbatch prepared in the step S4 was melt extruded through a twin-screw extruder, and was passed through a spinneret orifice to form a trickle of melt, followed by side-blowing cooling, stretching, heat-setting and winding in turn, to prepare a polyolefin fiber.
S6. The obtained polyolefin fiber was woven to make an anti-cutting fabric like a glove base.

### Example 3

Preparation of an anti-cutting fabric:
S1. At least two of silane coupling agent KH-602, silane coupling agent KH550, silane coupling agent KH540 and silane coupling agent YDH-151 were mixed arbitrarily with methylphenyldimethoxysilane to obtain a silane coupling agent, sodium silicate and calcium carbonate were mixed arbitrarily to obtain a dispersant, and then 0.5 part of the silane coupling agent and 0.15 part of the dispersant were taken and blended with an absolute ethanol to obtain a treatment solution.
S2. 5 parts of a fully dried ceramic fiber was added in a VC high-speed humidifying mixer (5 parts of nanoscale alumina with an average particle size of 30-70 nm, 5 parts of nanoscale silica with an average particle size of 30-70 nm, 40 parts of microscale alumina with an average particle size of 1-5 µm and an average length of 1-50 µm, and 40 parts of microscale silica with an average particle size of 1-5 µm and an average length of 1-50 µm per part of the fully dried ceramic fiber).
S3. The treatment solution obtained in the step S1 was uniformly dispersed on the ceramic fiber in the step S2, and high-speed stirred at 1800 rpm at a temperature of 70°C for 150 min.
S4. 90 parts of a polyolefin powder and the ceramic fiber treated in the step S3 were taken and uniformly mixed in a high-speed mixer at 400 rpm at a temperature of 100°C for 2.5 h, to obtain an anti-cutting functional masterbatch.
S5. The anti-cutting functional masterbatch prepared in the step S4 was melt extruded through a twin-screw extruder, and was passed through a spinneret orifice to form a trickle of melt, followed by side-blowing cooling, stretching, heat-setting and winding in turn, to prepare a polyolefin fiber.
S6. The obtained polyolefin fiber was woven to make an anti-cutting fabric like a glove base.

### Comparative Example 1

Preparation of an anti-cutting fabric:
S1. At least two of silane coupling agent KH-602, silane coupling agent KH550, silane coupling agent KH540 and silane coupling agent YDH-151 were mixed arbitrarily with methylphenyldimethoxysilane to obtain a silane coupling agent, sodium silicate and calcium carbonate were mixed arbitrarily to obtain a dispersant, and then 0.05 part of the silane coupling agent and 0.02 part of the dispersant were taken and blended with an absolute ethanol to obtain a treatment solution.
S2. 10 parts of a fully dried ceramic fiber was added in a VC high-speed humidifying mixer (3 parts of nanoscale alumina with an average particle size of 30-70 nm, 3 parts of nanoscale silica with an average particle size of 30-70 nm, 47 parts of microscale alumina with an average particle size of 1-5 µm and an average length of 1-50 µm, and 47 parts of microscale silica with an average particle size of 1-5 µm and an average length of 1-50 µm per part of the fully dried ceramic fiber).
S3. The treatment solution obtained in the step S1 was uniformly dispersed on the ceramic fiber in the step S2, and high-speed stirred at 2000 rpm at a temperature of 60°C for 2 h.
S4. 95 parts of a polyolefin powder and the ceramic fiber treated in the step S3 were taken and uniformly mixed in a high-speed mixer at 450 rpm at a temperature of 95°C for 2 h, to obtain an anti-cutting functional masterbatch.
S5. The anti-cutting functional masterbatch prepared in the step S4 was melt extruded through a twin-screw extruder, and was passed through a spinneret orifice to form a trickle of melt, followed by side-blowing cooling, stretching, heat-setting and winding in turn, to prepare a polyolefin fiber.
S6. The obtained polyolefin fiber was woven to make an anti-cutting fabric like a glove base.

### Comparative Example 2

Preparation of an anti-cutting fabric:
S1. At least two of silane coupling agent KH-602, silane coupling agent KH550, silane coupling agent KH540 and silane coupling agent YDH-151 were mixed arbitrarily with methylphenyldimethoxysilane to obtain a silane coupling agent, sodium silicate and calcium carbonate were mixed arbitrarily to obtain a dispersant, and then 0.05 part of the silane coupling agent and 0.02 part of the dispersant were taken and blended with an absolute ethanol to obtain a treatment solution.
S2. 15 parts of a fully dried ceramic fiber was added in a VC high-speed humidifying mixer (3 parts of nanoscale alumina with an average particle size of 30-70 nm, 3 parts of nanoscale silica with an average particle size of 30-70 nm, 47 parts of microscale alumina with an average particle size of 1-5 µm and an average length of 1-50 µm, and 47 parts of microscale silica with an average particle size of 1-5 µm and an average length of 1-50 µm per part of the fully dried ceramic fiber).
S3. The treatment solution obtained in the step S1 was uniformly dispersed on the ceramic fiber in the step S2, and high-speed stirred at 2000 rpm at a temperature of 60°C for 2 h.
S4. 95 parts of a polyolefin powder and the ceramic fiber treated in the step S3 were taken and uniformly mixed in a high-speed mixer at 450 rpm at a temperature of 95°C for 2 h, to obtain an anti-cutting functional masterbatch.
S5. The anti-cutting functional masterbatch prepared in the step S4 was melt extruded through a twin-screw extruder, and was passed through a spinneret orifice to form a trickle of melt, followed by side-blowing cooling, stretching, heat-setting and winding in turn, to prepare a polyolefin fiber.
S6. The obtained polyolefin fiber was woven to make an anti-cutting fabric like a glove base.

The glove bases made in Examples 1-3 and Comparative Examples 1-2 were respectively tested utilizing a TDM-100 glove anti-cutting performance testing machine. The performance grades of the glove bases made in Examples 1-3 can reach American Standard ASTM anti-cutting performance grade A2 and higher, and European standard ISO grade B and higher, the performance grade of the glove base made in Comparative Example 1 is American Standard ASTM anti-cutting performance grade A3, and European standard ISO grade C, and the performance grade of the glove base made in Comparative Example 2 is American standard ASTM anti-cutting grade A3, and European standard ISO grade D; and at the same time, the glove bases made in Examples 1-3 have very soft texture and no rough touch, and the glove bases made in Comparative Examples 1-2 have relatively hard texture and rough touch.

In addition, through research and comparison, it is found that when the mass ratio of the ceramic fiber to the polyolefin powder is 1: 19, and the high-speed mixer used for the premixing of the anti-cutting functional masterbatch is at a rotation speed of 450 rpm, the premixing temperature is 95°C, and the premixing time is 2 h, the prepared polyolefin fiber, and even the anti-cutting fabric, has excellent anti-cutting performance and soft hand feel, and at the same time, the spinning process is smooth and the fiber quality is stable.

In the present invention, there is no special limitation on the spinneret orifice used for spinning, and a conventional spinneret orifice in the art can be used.

In the present invention, there is no special limitation on the methods of melt extruding, side-blowing cooling, stretching, heat setting, winding and weaving, and methods well known to those skilled in the art can be used.

In the present invention, the raw materials used are all commercially available products, unless otherwise specified.

## Claims

1. A method for preparing a polyolefin fiber, comprising the following specific steps:
S1. mixing a silane coupling agent, a dispersant and an organic solvent to obtain a treatment solution;
S2. uniformly dispersing the treatment solution on a fully dried ceramic fiber and high-speed stirring, wherein the ceramic fiber is a mixture of nanoscale alumina, microscale alumina, nanoscale silica and microscale silica; and
S3. high-speed premixing a polyolefin powder and the treated ceramic fiber to obtain an anti-cutting functional masterbatch, and then melt extruding the same to obtain the polyolefin fiber.

2. The method for preparing a polyolefin fiber according to claim 1, wherein the mass of the silane coupling agent is 5%-15% of the mass of the fully dried ceramic fiber, the mass of the dispersant is 2%-4% of the mass of the fully dried ceramic fiber, and the mass ratio of the fully dried ceramic fiber to the polyolefin powder is 1:18-1:20.

3. The method for preparing a polyolefin fiber according to claim 1 or 2, wherein in per part of the fully dried ceramic fiber, both the parts by mass of the nanoscale alumina and the nanoscale silica are 3-10 parts, respectively, and both the parts by mass of the microscale alumina and the microscale silica are 40-50 parts, respectively.

4. The method for preparing a polyolefin fiber according to any of the preceding claims, wherein both the average particle sizes of the nanoscale alumina and the nanoscale silica are 30-70 nm, both the average particle sizes of the micronscale alumina and the micronscale silica are 1-5 µm, and both the average lengths of the microscale alumina and the microscale silica are 1-50 µm.

5. The method for preparing a polyolefin fiber according to any of the preceding claims, wherein the organic solvent is absolute ethanol, the silane coupling agent is a mixture of at least two of silane coupling agent KH-602, silane coupling agent KH550, silane coupling agent KH540 and silane coupling agent YDH-151 with methylphenyldimethoxysilane in any ratio, and the dispersant is a mixture of sodium silicate and calcium carbonate in any ratio.

6. The method for preparing a polyolefin fiber according any of the preceding claims, wherein in the step S2, the stirring temperature is 60-80°C, the stirring time is 100-150 min, and the stirring speed is 1800-2200 rpm.

7. The method for preparing a polyolefin fiber according to any of the preceding claims, wherein the specific procedure of the step S3 is as follows: a polyolefin powder and the treated ceramic fiber are first premixed in a high-speed mixer to obtain an anti-cutting functional masterbatch, and then the anti-cutting functional masterbatch is melt extruded through a twin-screw extruder, and is passed through a spinneret orifice to form a trickle of melt, followed by side-blowing cooling, stretching, heat-setting and winding in turn, to prepare the polyolefin fiber.

8. The method for preparing a polyolefin fiber according to claim 7, wherein the rotation speed of the premixing is 400-500 rpm, the premixing temperature is 90-100°C, and the premixing time is 1.5-2.5 h.

9. A polyolefin fiber obtained by the preparation method according to any one of claims 1-8.

10. A use of the polyolefin fiber obtained by the preparation method according to any one of claims 1-8 in an anti-cutting fabric.
